# EUROPEAN PATENT SPECIFICATION

(11) **EP 4 066 441 B1**
(45) Date of publication and mention of the grant of the patent: **22.03.2023**
(21) Application number: 19812979.3
(22) Date of filing: 28.11.2019
(51) Int. Cl.: H04L 41/082, H04L 41/0803, H04L 41/0859, H04L 41/069

(54) **MANAGEMENT OF IOT DEVICES IN WIRELESS COMMUNICATION NETWORKS**
VERWALTUNG VON IOT-VORRICHTUNGEN IN DRAHTLOSEN KOMMUNIKATIONSNETZEN
GESTION DE DISPOSITIFS IOT DANS LES RÉSEAUX DE COMMUNICATION SANS FIL

(43) Date of publication of application: 05.10.2022
(73) Proprietor: Telefonaktiebolaget LM Ericsson (publ), 164 83 Stockholm (SE)
(72) Inventor: KLITTE, Martin, 212 91 MALMÖ (SE); TARNEBERG, William, 226 47 LUND (SE)
(74) Representative: Ericsson
(86) International application number: PCT/EP2019/082902
(87) International publication number: WO 2021/104633

(56) References cited:
- US-A1- 2017 187 807
- US-A1- 2019 042 227
- US-A1- 2019 288 913

## Description

### TECHNICAL FIELD

The present invention relates generally to the field of Internet of Things (IoT) devices in wireless communication networks. More particularly, it relates to management of IoT devices in wireless communication networks.

### BACKGROUND

The Internet of Things (which hence forth will be referred to as loT in this disclosure) is a system of interrelated computing devices. It is typically expected that in the future there may be billions of IoT devices deployed in a multitude of facets throughout the world. For example, individual corporations and companies may have thousands of IoT devices to manage. The sheer amount of devices typically give rise to challenges in terms of security and vulnerability of the devices. IoT devices may e.g. be exposed to potential hacker attacks if not updated when a security flaw is found.

However, it becomes increasingly complex to manage a large fleet (comprising a very large number e.g. thousands, ten-thousands or more) of IoT devices. It is typically challenging in a test lab environment and even more so for remote loT devices that are unattended. It becomes especially challenging over time and with diverse conditions for the loT devices.

Therefore, there is a need for alternative approaches for management of IoT devices.

US 2019/0422277 A1 discloses methods and apparatus for providing over-the-air-updates to IoT sensor nodes.

### SUMMARY

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

It is an object of some embodiments to solve or mitigate, alleviate, or eliminate at least some of the above disadvantages and to provide methods and apparatuses for IoT device management.

According to a first aspect this is achieved by a method of a network operator controller for managing a plurality of Internet of Things (IoT)-devices associated with a loT device owner and connected to a wireless network.

A network operator controller may be an entity associated with or pertaining to a network operator. It may e.g. be a central server deployed in a network or a cloud implementation.

It should be noted that the terms network operator, network operator controller and network operator server may be interchangeable in this disclosure.

The method according to first aspect comprising receiving, by a network operator controller, a list of IoT devices that are scheduled for a firmware update, wherein the list is indicative of respective update data and update procedure for each loT device of the list. The update data may e.g. be tied to the updating firmware and may comprise firmware upgrades. Furthermore, different loT devices may require the same or different firmware updates, which may specified in the list.

The method also comprises determining, by the network operator controller, at least one network node serving a geographical area covering a respective location of each of the loT devices of the list of devices. The devices according to the list may be scattered in several different locations. The method may comprise finding the network nodes that serve the devices of the list. One network node may serve several devises on the list.

The method also comprises causing caching of the respective update data.

The method also comprises determining an updating schedule indicative of when each loT device (of the list) is to receive its respective update data, and also instructing, by the network operator controller, the at least one network node to update the loT devices with the cached respective update data according to the updating schedule and update procedure.

Hence, the method according to the first aspect moves the responsibility for updating the loT devices pertaining to a device owner, from the device owner to the network operator of the network which caters the loT devices. The network operator may then distribute the task of updating the loT devices to network nodes within the network that serves the geographical area in which a respective loT device to be updated is located. The set up provides better network transparency for the device owner and reduced network traffic and load compared to conventional set ups.

In some embodiments, the update procedure comprises information indicative of at least one procedure for carrying out the firmware update and at least one procedure for determining whether the firmware update is successfully performed. The update procedure may e.g. comprise instructions on what upgrades/updates/patches/firmware should be distributed and to whom and in what order. The update procedure may further comprise control instructions or acknowledgement procedures that should be carried out in order to establish that the updates were carried out properly and the devices have been correctly upgraded/updated.

In some embodiments the method may further comprise instructing the at least one network node to instruct the loT devices to remain in an active state for a whole duration of receiving the respective update data according to the updating schedule and to return to a default sleep cycle when the firmware update is complete. The update may e.g. be transferred in several data transmissions that may span over a certain amount of time (e.g. seconds, minutes, hours etc.) and the network node may instruct the loT devices which it serves and which are to receive updates that the updates will be relayed during the time period and the loT devices are not allowed to enter their default sleep cycle until the updates have been received and/or successfully installed.

In some embodiments, the list of IoT devices may comprise a further list of vulnerable loT devices. The method may thus also in some embodiments comprise instructing the at least one network node to block the vulnerable loT devices from communicating with the network until they have received required update data. Receiving (and installing) required update data may result in that the loT device enters a desired state which may be the result of the successful update. In some embodiments, the further list may be merged with the list of IoT devices, and devices to be blocked are tagged as such in the list of IoT devices.

In some embodiments, all of the loT devices of the list may be considered vulnerable devices.

In some embodiments, the method may comprise instructing the at least one network node to block the vulnerable loT devices from communicating using at least one of wi-fi, Bluetooth, near filed communication (NFC) or other short range communication types.

In some embodiments, the method may comprise instructing the at least one network node to block the vulnerable loT device from communicating with any other entity than the at least one network node. Hence the blocking instruction may in some embodiments comprise that external entities are blocked from communicating with the vulnerable device, and the vulnerable device may only communicate with the at least network node (or network operator controller) until the block is lifted.

In some embodiments, the method may further comprise instructing the at least one network node to push the required update data to the blocked vulnerable loT devices according to the updating schedule and determine whether the vulnerable loT devices were updated successfully based on the update procedure.

In some embodiments, the method may further comprise informing the IoT device owner of any unsuccessful updates and instructing the at least one network node to unblock the vulnerable loT devices when it is determined that the vulnerable loT devices are successfully updated and informing the loT device owner server of the successful update.

In some embodiments, the updating schedule is based on at least one network condition the at least one network condition relates to at least one or more of: expected network load, expected load from network users, usage of internal transport networks, compute nodes, timing, loT device order, IoT device activity and loT device priority.

In some embodiments, causing caching of the respective update data comprises caching the respective update data at a central network server and/or instructing the at least one network node to cache the respective update data. The update data (i.e. the firmware update) may be cached centrally at the network operator server, or at a central compute node, or edge computing node (edge data center) or it may be locally cached at the network node serving the loT device that is to be updated. The determination of where to cache data may be based on the size of the update, local and/or overall network load, complexity of the update, location of the loT devices to be updated etc.

An edge data center may e.g. be a network node or server deployed in the network and close to the network cells, which may have storing and computing capabilities. The edge data center may e.g. store firmware updates and relay them to the loT devices directly or through another network node. Hence, an edge data center is in this disclosure taken to mean a general purpose compute node that is located closer to the eNB/gNB:s in the operator infrastructure than a central data center. Size and location of the data centre can vary a lot. The edge data center typically makes storage and compute available for the firmware caching and loT device update procedures as well as the interaction/feedback to the device owner. It typically allows interaction with the traditional network nodes responsible for loT connectivity for devices.

In some embodiments, the method may further comprise determining based on the update procedure whether IoT devices of the list were successfully updated according to the updating schedule and informing an loT device owner server of any unsuccessful or successful updates.

In some embodiments, when it is determined that IoT devices of the list failed in updating successfully, the method may further comprise gathering information associated with the update and indicative of reasons for failure of successful updating and informing the loT device owner server of the gathered information. The information may e.g. comprise information on what transpired when the upgrade was done (logs, received ack/nacks, (un)successful control checks, timings, etc.). It may also include information from network perspective on what happened (logs, procedures, transferrals, responses etc.). In some scenarios, geographical location could be provided as well if it e.g. becomes necessary for the device owner to physically go to the device in order to repair/update it.

In some embodiments, the at least one network node is a base station or a compute node. In some embodiments, the at least network node is an edge data center. In some embodiments the at least one network node is an eNb, gNb or access node.

A second aspect is a computer program product comprising a non-transitory computer readable medium. The non-transitory computer readable medium has stored there on a computer program comprising program instructions. The computer program is configured to be loadable into a data-processing unit comprising a processor and a memory associated with or integral to the data-processing unit. When loaded into the data processing unit, the computer program is configured to be stored in the memory. The computer program when loaded into and run by the processor is configured to cause execution of the method steps according to the first aspect.

A third aspect is an apparatus of a network operator controller for managing a plurality of Internet of Things (IoT)-devices associated with an loT device owner and connected to a wireless network. The apparatus comprising controlling circuitry configured to cause reception of a list of IoT devices that are scheduled for a firmware update, wherein the list is indicative of respective update data and update procedure for each loT device of the list.

The controlling circuitry is also configured to cause determination of at least one network node serving a geographical area covering a respective location of each of the loT devices of the list of devices and caching of the respective update data.

The controlling circuitry is also configured to cause determination of an updating schedule indicative of when each loT device is to receive its respective update data and, for each loT device scheduled for the update, instructing of the at least one network node to update the loT device with the cached respective update data according to the updating schedule and update procedure.

In some embodiments, any of the above aspects may additionally have features identical with or corresponding to any of the various features as explained above for any of the other aspects.

An advantage of some embodiments is that IoT device management is improved by reducing network traffic and increasing network transparency to a device owner.

An advantage of some embodiments is security of IoT devices is enhanced since devices that are not sufficiently updated with the latest firmware and hence may pose a risk may be blocked from communicating with the network.

Another advantage of some embodiments is that control of IoT firmware updates may be enhanced.

Another advantage of some embodiments is that the probability of successful updates of the loT devices are increased since the loT devices may be instructed to diverge from their default sleep cycle in order to stay awake for the entire duration of time that an update is being received.

### BRIEF DESCRIPTION OF THE DRAWINGS

Further objects, features and advantages will appear from the following detailed description of embodiments, with reference being made to the accompanying drawings, in which:
Fig. 1 is a schematic drawing illustrating a network topology;
Fig. 2 is a schematic drawing illustrating a network topology;
Fig. 3 is a schematic drawing illustrating device management according to some embodiments;
Fig. 4 is a schematic drawing illustrating device management according to some embodiments;
Fig. 5 is a flowchart illustrating example method steps according to some embodiments;
Fig 6 is a flowchart illustrating example method steps according to some embodiments;
Fig. 7 is a combined flowchart and signaling diagram illustrating example method/signaling steps according to some embodiments;
Fig. 8 is a schematic drawing illustrating a computer program product according to some embodiments; and
Fig. 9 is a block diagram illustrating an example arrangement according to some embodiments

### DETAILED DESCRIPTION

In the following, embodiments will be described where network transparency is enhanced and vulnerability is reduced by means of improved IoT device management.

As noted previously, when the amount of connected loT devices increases so do also the challenges in managing the devices. With IoT, it is expected that there will be billions of such devices deployed in a multitude of facets throughout the world. Individual corporations and companies can have thousands of IoT devices to manage. Security and device management at scale is typically key in making IoT plausible. Specifically, firmware updates over the air (FOTA) containing security patches and feature will typically be needed to keep loT devices secure and highly functional. IoT devices are left exposed to potential hacker attacks if not updated after a security flaw is found. However, IoT devices can be hard to reach due to e.g. mobility, power saving algorithms, and limited connectivity or simply because the device owner has no real way of knowing the actual and or exact location of a respective loT device which it owns.

Distributing a new firmware to a large number of IoT devices will typically require the same firmware to be sent out in the same amount as there are loT devices, or more when there are failures in the transferral or updating procedure. The sheer amount of data transferral causes a high load on possibly critical systems over a period of time for transmitting and performing the updates.

It becomes complex to manage a large fleet of devices, tracking current state, update, confirm the update, handle that the loT device is not doing its task(s) during the update period, handling error cases and so on. It is challenging in a test lab environment and even more so for remote loT devices that are unattended in real scenarios. It becomes especially challenging over time and with diverse conditions for the loT devices.

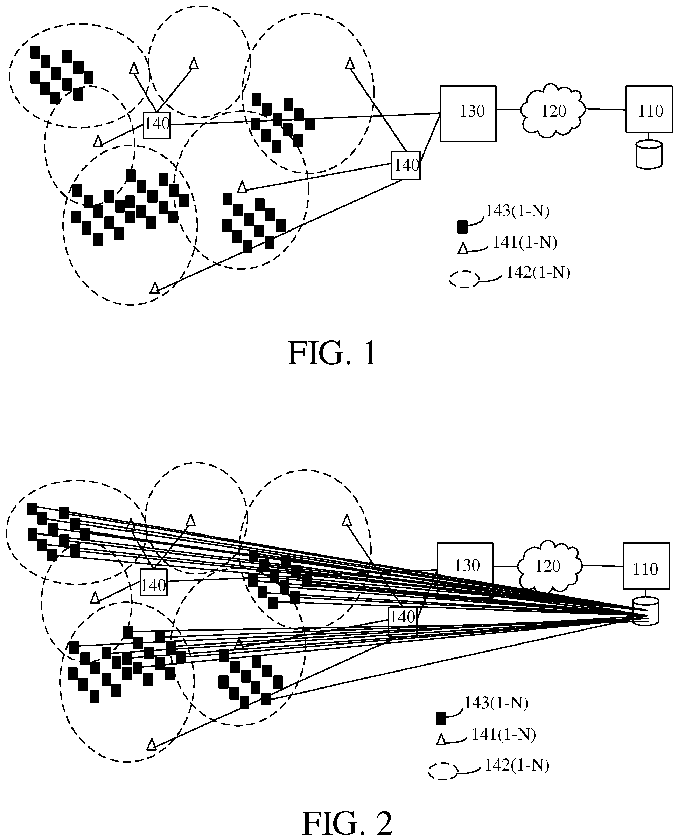

A typical (although somewhat simplified) network topology comprising IoT devices may be seen in Fig. 1. In Fig. 1 an loT device owner which may be represented by and/or comprise a server or controller 110 is being connected to an operator network 130 via a network cloud 120. The network cloud may e.g. be the internet.

A plurality of data server centers 140 communicates with the operator network 130 and with a plurality of network nodes 141(1-N). The network nodes 141(1-N) serve a geographical area 142(1-N) (such as a network cell) in which one or more IoT devices 143(1-N) are deployed. The loT devices 143(1-N) are in different physical locations, possibly clustered. The device owner server 110 may, as noted, have access to the operator network 130 via the Internet. Furthermore, the loT devices might use different operators and exist in many countries. I.e. the device owner server may typically have access to many different operator's networks over internet.

In some embodiments, the data server centers 140 may be an edge DC (Data Center), however the features/services provided could just as well be handled by the other compute nodes (such as eNB, gNB, or Evolved Packet Cores (EPC) for example) within the network. If there is an edge DC it could be one per eNB, one for several eNB:s and so on depending on the needs and layout of the network.

As can be seen in figure 2, for deployed loT devices 143(1-N) in conventional systems, new firmware is typically stored and distributed from a remote central server associated with the loT device owner (e.g. the device owner server 110, the terms device owner and device owner server may be used interchangeably). Firmware updates typically require loT devices to access and fetch new firmware from the central server of the device owner. The device owner 110 will need to provide adequate bandwidth from the server containing the firmware when commencing on an update.

Firmware updates are rolled out to the loT devices 143(1-N) from the remote server of the device owner server 110. The firmware typically needs to be propagated from the device owner's servers to each loT device 143(1-N) through one connection/session per device through the entire network. Since a firmware update may be in the size of MegaBytes and data being sent from the devices to the base stations/operator controller/device owner/ may be in the size of KiloBytes, the roll out from the device owner typically requires a large amount of resources and hence constitute an overall large network load. The size of the data should however be seen as an example, and may take on other values depending on system, deployment, future needs etc.

The loT device owner server 110 sends a message for the update and once the respective loT device comes online in order to send any data it has it will also check if it has any pending messages from the device owner server 110. The time between sending the message from the server 110 to when it is received is not known in detail by the device owner server 110 since it typically depends on network configuration and scheduling of the loT device for its communication and this is all controlled by the operator network 130.

The updates may hence take time to complete since there may be thousands of IoT devices and they will typically not be updated at the same time. This is attributed to server access and to power save features that make the devices disconnect from the network for extended periods of time.

Updates and particularly uncoordinated ones (i.e. trying and failing over and over again to transmit/receive), will consume power from the loT device that typically will shorten battery life.

Device owners do typically not have knowledge of and control over the connection to individual loT devices, meaning that they will not know when they can expect an update to be possible to perform or how many attempts it will require. A connection to an loT device might e.g. not be possible due to a congested network, or non-existent or partial wireless coverage.

Non-updated loT devices with security flaws, critical bugs or API incompatibilities will hence typically continue to be connected and communicative with the network until updated. I.e. there is no real way to disconnect the loT device that is pending updates. Firmware updates are generally proportionally larger than individual data objects from an loT device. Consequently, an loT device might operate and/or communicate for a long time while pending an update, and may hence constitute a serious security threat.

When using 3GPP technologies for IoT devices, since the modem is usually closed, the network is operated by a network operator and the internals of the network are usually quite hidden to external actors, IoT device owners have less visibility into the network than they typically may have in other wireless technologies. Finding competence for 3GPP stacks is harder than for instance Wifi or other more open standards.

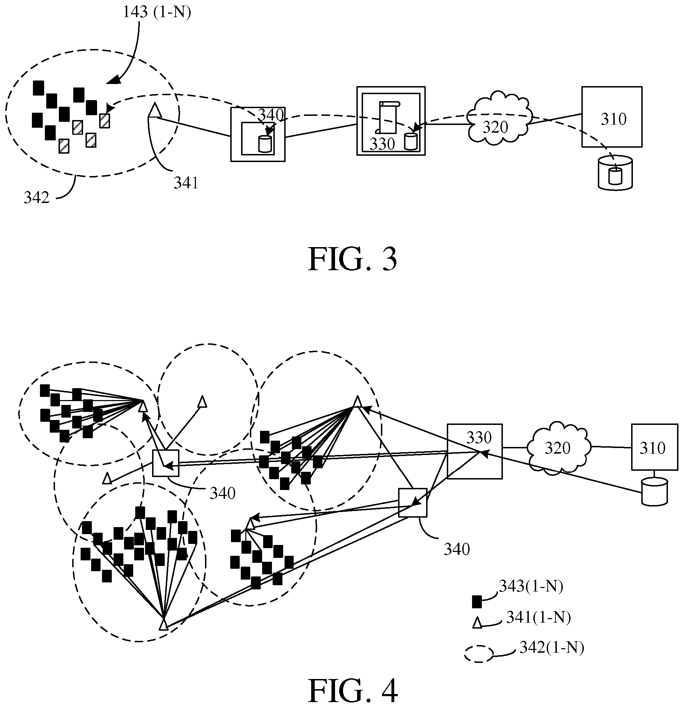

Hence according to some embodiments herein, it is proposed to utilize the network operator for offering the service to perform and distribute firmware updates to the loT devices of the device owner, as is illustrated schematically in Figs. 3-4.

In short in Fig 3, a network operator (i.e. a network operator server or controller) 330 may receive from an loT device owner 310 (e.g. a device owner server) a list of IoT devices 143(1-N) that should be updated as well as receiving other features needed to perform the update. The loT devices may be presented on the list in association with ID of their SIM card, and/or IMSI number of the device.

It should be noted that when referring to an loT device owner in this disclosure an owner of the lot devices are meant. The device owner may e.g. be a company, an association, a cooperation, a natural person, a legal person etc which have produced and/or deployed and/or utilizes the services of the loT devices, and may be represented in a network e.g. through an associated device owner server. The server may be a physical or cloud implementation. Hence, the device owner may comprise a server or other computational entity that is eligible to communicate with the loT devices and/or the network operator/network nodes. Thus, the terms IoT device owner, device owner and loT device owner server may be used interchangeably in this disclosure.

In the same manner, the network operator may be seen as the actor that provides the network as well as its services. The network operator may be a company, an association, a cooperation, etc. and may be represented in the network by means of a network operator server and/or network operator controller, thus the terms network operator server, network operator, network operator controller may be used interchangeably in this disclosure.

The Network operator server 330 may receive the list and the other needed features from the loT device owner server 310 through an internet connection 320. The new firmware to be updated is uploaded from the device owner server 310, e.g. via programmatic Application Programming Interface (API) or via a Graphical User Interface (GUI), and it is then distributed within the operator network to reach the places closest to (or best suited for accessing) the loT devices 143(1-N) that are to be upgraded. The operator then performs the upgrades according to a calculated schedule (based on optimization objectives taking into account for instance time of day, device order, device number at the time, etc.)

The network operator server 330 may e.g. cache the firmware either centrally at the operator server and/or at the network nodes 340, 341 whom in the end will handle the actual update of the loT device. This will reduce the load on the device owner's infrastructure and reduce the load on the networks when collecting the firmware since instead of rolling out the same update over as many connections that there are loT devices over the entire network, one update is cached and distributed geographically close to the devices (e.g. in the same cell), compare e.g. Fig. 2 with Fig. 4.

Fig. 4 illustrates an loT device management scheme according to some embodiments, where management of the loT devices have been moved from the central IoT device owner server 310 to the network operator server 330, whom in turn instructs the network nodes that serve an area where the loT devices to be updated are located to update the devices. In comparison to Fig. 2, the sheer amount of network communication needed, and thus network load, is reduced and better visibility of the devices to the device owner is enabled as will be described in the following.

Furthermore, overall security may be enhanced since the network operator may keep track on which devices managed to perform their updates successfully, and which did not. The ones who did not perform their updates successfully may be blocked from accessing the internet until they are adequately updated. In the same manner, the network operator may receive information from the loT device owner indicating which IoT devices are vulnerable since they have not yet received adequate firmware updates, and the network operator may temporarily block these devices from communicating with e.g. the internet and or temporarily block these devices from being communicated with external entities that are not the network operator and/or the network node performing the updates.

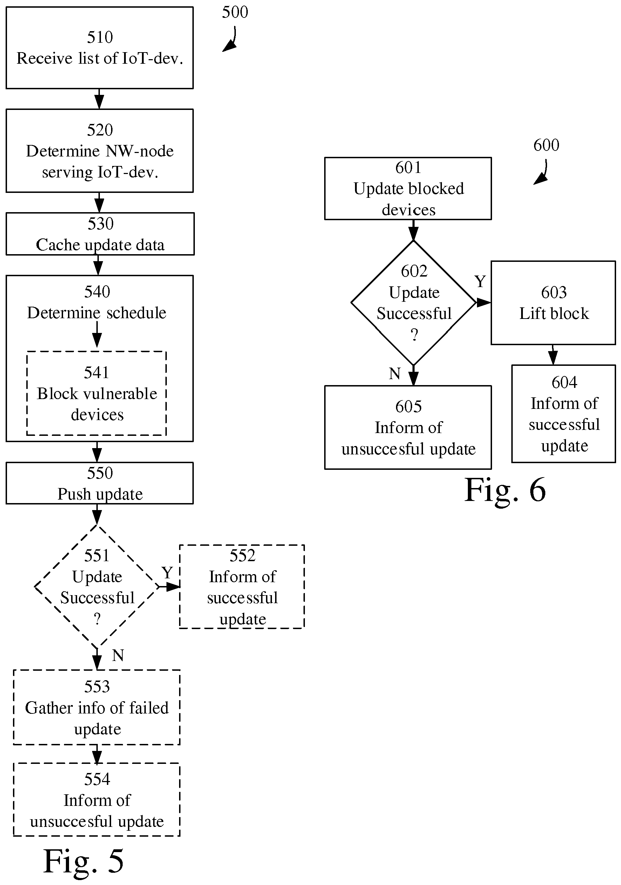

Fig. 5 illustrates an example method 500 according to some embodiments. The method 500 may be carried out by the network operator server/controller 330 of Figs. 3 and 4.

The method 500 is of a network operator controller for managing a plurality of Internet of Things (IoT) devices connected associated with an loT device owner and to a wireless network. The method 500 starts in step 510 with receiving a list of IoT devices that are scheduled for a firmware update. The list is indicative of respective update data and update procedure for each loT device of the list. The update data may e.g. comprise specific firmware update(s) that should be distributed to a respective loT device. The update procedure may comprise information indicative of at least one procedure for carrying out the firmware update and/or at least one procedure for determining whether the firmware update is successfully performed. Hence the update procedure may comprise instructions indicative of how the update is to be performed, and how it may be determined whether the update was successful or not. Furthermore, the update procedure may involve different tools that execute on the network side.

The list, update procedure and firmware/update data may be uploaded to the network operator controller by the device owner e.g. through a device owner server (e.g. the device owner server 310 of Figs 3-4).

The method 500 then continues in step 520 with determining at least one network node serving a geographical area covering a respective location of each of the loT devices of the list of devices (compare with Figs. 3 and 4). In step 530 the method 500 comprises causing caching of the respective update data. The network operator controller may e.g. cache the update data (i.e. the firmware for each respective loT device to be updated) locally at an internal or external server, or closer to the devices that are to be updated, e.g. by caching the update data at the network node serving the area comprising the loT device(s) to be updated or at computing node/base station associated with the network node. Hence in some embodiments, causing caching of the respective update data comprises caching the respective update data at a central network server and/or instructing the at least one network node to cache the respective update data.

Then the method 500 continues in step 540 with determining an updating schedule indicative of when each loT device is to receive its respective update data. In some embodiments, the updating schedule may be based on at least one network condition. The at least one network condition may in some embodiments relate to at least one or more of: expected network load, expected load from network users, usage of internal transport networks, compute nodes, timing, loT device order, IoT device activity and loT device priority. If it e.g. is expected that some parts of the network may experience heavy load, updating the loT devices served by the network node which is expected to experience a heavy load may be scheduled to take place at a point of time when the network load is not expected to be so high. In some embodiments, it may be of essence that a certain group of devices receive their updates quickly and they may hence be scheduled to receive their updates as soon as possible.

Then, the method 500 continues in step 550 with instructing the at least one network node to update the loT devices with the cached respective update data according to the updating schedule and update procedure. In some embodiments, the updating schedule may serve to inform the loT devices when they should stay awake to receive an update. Hence the method 500 may in some embodiments comprise instructing the at least one network node to instruct the loT devices to remain in an active state for a whole duration of receiving the respective update data according to the updating schedule and to return to a default sleep cycle when the firmware update is complete. In some embodiments, the loT devices scheduled for update (i.e on the list), but which have not yet received the update or is in the process of installing it could be put in an even more aggressive power save mode while waiting for their update, they may e.g. be instructed to enter a sleep period which is to end at a certain point of time, and during this sleep period the devise are not contactable at all. This may be feasible since possible transmission data from the device may be unwanted until it has been updated and hence is regarded as secure. Another advantage with the aggressive power save mode is that network frequency/air/compute resources may be better utilised by not having to serve the loT devices waiting to be updated. The devices are then made active to ensure smooth update and once updated set back to default sleep cycle.

Hence the probability that an update is completed in one session is increased since the risk of the loT device going to sleep during reception of updates are decreased. This may result in that over all network load is decreased since multiple transmission attempts of updates may be reduced. In the same manner security is enhanced since the risk of IoT devices being partially updated or not updated at all is reduced.

In some embodiments, the list of IoT devices may also comprises a further list of vulnerable loT devices, and the method 500 may further in step 540 where an update schedule is determined comprise the optional step of 541 comprising instructing the at least one network node to block the vulnerable loT devices from communicating with the network until they (the loT devices) have received required update data (i.e the IoT device(s) have entered a desired state which could be a result of a successful update/data transfer). The aspect of blocking vulnerable devise will be described in more detail in conjunction with Fig. 6.

In some embodiments, all of the loT devices of the list may be marked as vulnerable and should hence be blocked from communication. It may e.g. be in some embodiments that if a loT device does not have the latest available firmware, then it should be blocked from communication. I.e. it should not be allowed to communicate, and other entities that are not the network operator or network node which will carry out the updates may not communicate with the un-updated devices. Hence the further list may in some embodiments be the list, and all devices on the list should be blocked until they are successfully updated.

Hence, in some embodiments, all of the loT devices of the list may be considered vulnerable devices.

In some embodiments, the method may comprise instructing the at least one network node to block the vulnerable loT devices from communicating using at least one of wi-fi, Bluetooth, near filed communication (NFC) or other short range communication types.

In some embodiments, the method may comprise instructing the at least one network node to block the vulnerable loT device from communicating with any other entity than the at least one network node/network operator. Hence the blocking instruction may in some embodiments comprise that external entities are blocked from communicating with the vulnerable device, and the vulnerable device may only communicate with the at least network node (or network operator controller) until the block is lifted.

In some embodiments, the method 500 may optionally comprise the step 551 of determining, based on the update procedure, whether IoT devices of the list were successfully updated according to the updating schedule. The update procedure may e.g. inform the network operator how it may be determined that an update was successful or not. The update procedure may e.g. comprise a firmware version which the device should have if the update was installed correctly, and the network operator may request the current version from the loT device and check whether the current version matches the firmware version of the procedure. Then the method may continue in steps 552 and 554 with informing an loT device owner server of any unsuccessful (step 554, N-path out of 551) or successful (step 552, Y-path out of 551) updates.

In some embodiments, when it is determined that IoT devices of the list failed in updating successfully (N-path out of 551), the method may further comprise step 553 of gathering information associated with the update and indicative of reasons for failure of successful updating and informing (possibly in step 554 of the method 500) the loT device owner server of the gathered information. The information may e.g. indicate what transpired when the update was done. Including information from network perspective on what happened. In some embodiments, the information may comprise a geographical location of the loT device which may, if it becomes necessary for the loT device owner to physically go to the loT device, assist the loT device owner in actually finding the loT device.

Hence the loT device owner is enabled to always be aware of the current state and progress of the firmware updates. By means of the embodiments herein, not only failures are visible to the loT device owner. However, as described herein special care may be taken when failures in updates are detected. The failures can result in anything from a device becoming "bricked" i.e. it never comes back online, to communication failing (i.e. the loT device is, or becomes, unreachable over the network) or that retries are needed and so on. When failure occurs it may be of importance to convey information to the loT device owner to assist in amending problems in their software or updating procedures, locating the device for physical inspection, and possibly identify problems with the network operator when performing the updates.

Potentially the loT device owner can implement triggers on the progress state of the update. Such trigger may e.g. be informing the device owner and/or its associated users/clients on the progress of the updates, start using the loT device, doing post-upgrade checks and so on.

The method 500 may in some embodiments be combined with the method 600 of Fig 6. For example, in step 541 of the method 500 vulnerable IoT devices were blocked from communicating with e.g. the internet and/or the network since they posed a risk for potential attacks. Then step 550 of the method 500 may be combined with step 601 of the method 600. In step 601 the method 600 comprises instructing the at least one network node to push (or otherwise transfer) the required update data to the blocked vulnerable loT devices according to the updating schedule and in step 602 determine whether the vulnerable loT devices were updated successfully based on the update procedure.

It should be noted that the term "push required update data" may have various meanings. For example, the term may indicate an actual push from the network operator (or network node), i.e. the network operator instructs the device in a manner according to "here is the firmware, install it!" i.e. as an imperative instruction. In some embodiments, push may be that the device periodically calls a server/network operator/network node and checks if there are new firmware available and then downloads it. In some embodiments, push may be that when the device calls home to check for new firmware, the network operator, or the device owner, will tell the device to fetch it from the network operators cached update package. The network operator might hence in some cases act as the place where the device checks for the firmware update.

In some embodiments, the step 602 of the method 600 may be incorporated with the step 551 of the method 500.

The method 600 may then continue in either step 605 (N-path out of 602) with informing an loT device owner server of any unsuccessful updates, or in step 603 (Y-path out of 602) with instructing the at least one network node to unblock the vulnerable loT devices when it is determined that the vulnerable loT devices are successfully updated. The method may then continue in step 604 with informing the loT device owner server of the successful update.

In some embodiments, the step 605 of the method 600 may be incorporated with the step 554 of the method 500 and may further comprise the step 553 of gathering information associated with the reasons for the failed update, and further inform the device owner of the gathered information.

In some embodiments, the at least one network node is a base station or a compute node. In some embodiment the at least one network node is an edge data center, or a eNb, gNb, EPC or access node.

The embodiments described herein entails the means for a network operator to improve loT device security and network efficiency by giving the operator the mechanism to manage and update loT device firmware. This removes the need to fetch the same firmware for all loT devices (that is envisioned to be in the several thousands) from the device owners' servers and thus putting strain on both the device owner and an operator's network.

The embodiments described herein minimizes a vulnerability window where an un-updated loT device is susceptible for malicious attacks by preventing connectivity for devices requested for update that have not yet be updated and allow connectivity again once the devices have been updated.

According to some embodiments, network operators may become an important part of IoT device owner (manufacturers) Continuous Integration/Continuous Deployment (CI/CD) flow ensuring that IoT using 3GPP standards can keep a high quality and low cost by not forcing device manufacturers to invest in a lot of test equipment and interoperability test capacity (people, organization and equipment). This will lower the barrier for smaller companies to produce devices for a global market stimulating innovation in the 3GPP IoT device ecosystem.

The embodiments herein allows for distribution of firmware and other needed components through the distributed network of an network operator in order to reduce load on servers and network for re-sending the same firmware over and over again.

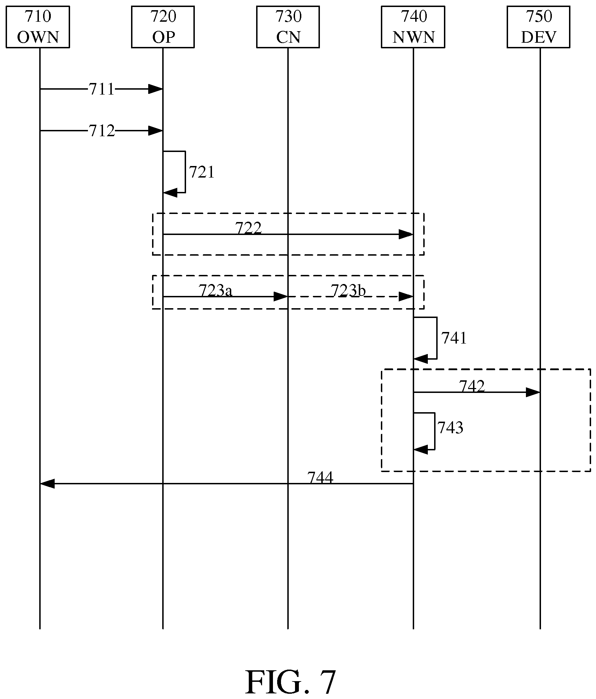

The scenario of Figs. 3 and 4 together with the methods of Figs. 5 and 6 may be visualised in the combined flowchart and signalling diagram of Fig. 7. In figure 7, a device owner (OWN) 710, a network operator (OP) 720, a compute node (CN) 730, a network node (NW) 740 and an IoT device (DEV) 750 are arranged to communicate. The device owner 710 may e.g. be the device owner (server/controller) as described in conjunction with any of the previous figures 3-6. Similarly, the network operator 720 may be the network operator (server/controller) of Figs 3-6, the compute node 730 may be the compute node of Figs. 3-6, the network node may 740 may be the network node of Figs. 3-6 and the loT device 750 may be the loT device of Figs. 3-6. In some embodiments, the compute node 730 and the network node 740 refer to the same entity.

The device owner 710 may perform 711 authentication signalling towards the network operator 720. Necessary credentials and key(s) may e.g. be exchanged according to conventional methods. Then the device owner 710 may upload to the network operator the firmware that should be used for updating one or more of the device owner's IoT devices. The network operator 720 may e.g. receive a list of IoT devices that are scheduled for a firmware update, wherein the list is indicative of respective update data (i.e. the uploaded firmware) and update procedure for each loT device of the list (compare with step 510 of the method 500). It should be noted that the update data may indicate the same firmware update for all of the devices. I.e. the list may comprise N devices and may indicate that device 1 to N (where N is an integer) on the list is to receive firmware X. Respective firmware data may hence not have to be different for each or a subset of devices on the list. In some embodiments, the list may indicate that devices 1 toY (Y<N) is to receive firmware X and devices (Y+1) to N is to receive firmware Y, and respective firmware data may hence be different for different devices.

The network operator may then determine 721 at least one network node serving a geographical area covering a respective location of each of the loT devices of the list of devices (compare with step 520 of the method 500), and causing caching 723a, 723b of the respective update data (compare with step 530 of the method 500). The network operator may e.g. distribute and cache the updated firmware at a computing node which in turn may distribute it to a network node serving an area comprising the respective loT device that is to be updated.

In figure 7, the network node 740 is illustrated to determining 741 an updating schedule indicative of when each loT device is to receive its respective update data. However, this determination could in some embodiments also be carried out by the network operator 720. The network operator may e.g. determine a schedule and relay it to the network node, or instruct the network node 740 to determine a schedule.

The network operator 720 may further instruct 742 the at least one network node to update the loT devices with the cached respective update data according to the updating schedule and update procedure. In figure 7, the network node 740 performs 741 the firmware updates towards the loT devices.

The network node may 740 then be instructed by the network operator 720 to gather information 744 pertaining to unsuccessful updates and inform the device owner 710 of gathered information as well as of the unsuccessful and successful updates performed, possibly with the network operator 720 as an intermediate (compare with steps 551-554 of the method 500 and steps 602-605 of the method 600).

As noted in method 5 and 6, some of the embodiments herein enables the network operator to receive information of vulnerable loT devices that lack the correct firmware updates. Hence the network operator may block 722 IoT devices that has been tagged as vulnerable (compare with step 541 of method 500). The network node may e.g. instruct the network node to block the vulnerable loT devices from communicating with the network until they have received (and/or successfully installed) required update data.

Then, when the network node 740 has determined that a blocked loT device has been successfully updated with the required firmware, the network node 740 may lift 743 the block on the loT device allowing it to communicate freely with the network again (compare with steps 602-605 in the method 600).

Hence, in some embodiments the device owner may upload, via for instance Representational State Transfer (REST) APIs, the firmware, lists and other needed information to the network operator.

The network operator can then further distribute the update task to the eNB:s that are tasked with scheduling the upgrades of the devices when it has a low load and handle the blocking and un-blocking and error reporting to the eNB and/or related edge node for those devices. This to prevent the same firmware being fetched over and over again for every device or from every eNB that does the actual update.

Some of the embodiments described herein may further be implemented as a network cloud implementation.

Authentication of the loT device owner is envisioned to be done in some embodiments via the same interface that is used for managing the loT devices and subscriptions for the loT devices. I.e. the network operator and the device owner have an existing trust set up that may be automated via web/cloud services.

The firmware upgrade service can in some embodiments be distributed as containers or virtual machines (VMs) from the device owner to the operator. The VM/container may contain all components and configuration needed for updating devices owned by the device owner. The details on how to start and run the VM and configure it may be specified from the device owner. How to run VM:s and containers is fairly standardized and may be made according to conventional and known methods. This would provide portability through the operator network, isolation from the normal network operations, and security for the upgrade (raw firmware, keys and processes for upgrades) to be tampered with or accessed by entities that should not have access to it.

The upgrade package in a VM or container (possibly in a secure container variant) can then be purged from the system to make sure it isn't misused at a later stage.

The firmware update service provided by the operator may in some embodiments be tied in to the device manufacturers CI/CD flow with the REST (or similar) interfaces provided by the network operator. This may make it possible to automate the entire flow in an efficient way and giving both the network operator and the device manufacturer/owner a streamlined and more contemporary way to deploy software/firmware to IoT devices.

The cloud implementation may give smaller companies a way to scale their business in a more cloud native way, i.e. they could sell their devices and not have to invest as much in infrastructure to manage updates and given the increased information and cooperation with the network operators cut down on lead times for debug activities. Given that for loT devices to be cost effective the same devices should ideally be sold globally, this kind of service would help do tests in many different operators and network configurations without the device owner having to invest in a large test setup for their firmware test.

It could be envisioned that the operators offer special test nodes where the loT device owners can put a few devices for early test to further reduce the risk of breaking live networks.

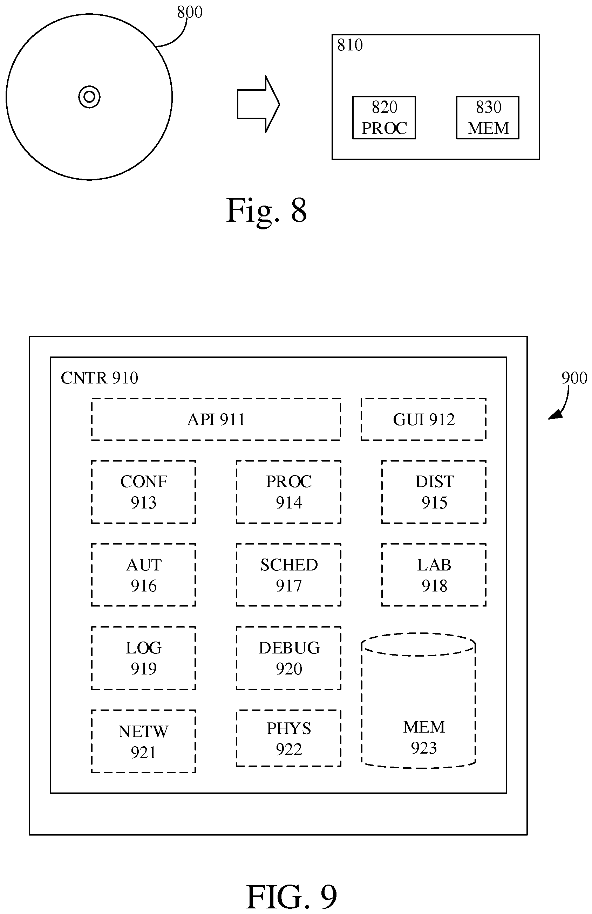

Fig. 8 illustrates a computer program product comprising a non-transitory computer readable medium 800, wherein the non-transitory computer readable medium 800 has stored there on a computer program comprising program instructions. The computer program is configured to be loadable into a data-processing unit 810, comprising a processor (PROC) 830 and a memory (MEM) 820 associated with or integral to the data-processing unit. When loaded into the data-processing unit 810, the computer program is configured to be stored in the memory 820, wherein the computer program, when loaded into and run by the processor 830 is configured to cause execution of the method steps according to any of the methods described in conjunction with the figures 5-7

Fig. 9 illustrates an arrangement of an apparatus 900 of a network operator controller for managing a plurality of Internet of Things (IoT)-devices associated with an loT device owner and connected to a wireless network according to some embodiments. The apparatus may e.g. be comprised in a network operator server. E.g. the network operator server as described in conjunction with any of the previous Figs. 3-8. The apparatus 900 may be configured to carry out any of the methods as described in conjunction with any of the Figs. 5-7. In some embodiments, the apparatus 900 may be comprised in a network node, e.g. the network node as described in conjunction with Figs. 3-8. In some embodiments, the apparatus 900 may be comprised in a loT device owner server, e.g. the device owner server described in conjunction with Figs. 3-8.

The apparatus 900 may comprise controlling circuitry 910 (CNTR) configured to cause reception of a list of IoT devices that are scheduled for a firmware update, wherein the list is indicative of respective update data and update procedure for each loT device of the list. The controlling circuitry 910 may be configured to cause determination of at least one network node serving a geographical area covering a respective location of each of the loT devices of the list of devices and caching of the respective update data. The controlling circuitry 910 may be configured to cause determination of an updating schedule indicative of when each loT device is to receive its respective update data, and for each loT device scheduled for the update, cause instructing of the at least one network node to update the loT device with the cached respective update data according to the updating schedule and update procedure.

In some embodiments, the updating schedule is based on at least one network condition and the at least one network condition relates to at least one or more of: expected network load, expected load from network users, usage of internal transport networks, compute nodes, timing, loT device order, IoT device activity and loT device priority.

In some embodiments, the controlling circuitry 910 is configured to cause caching of the respective update data at a central network server and/or causing instructing of the at least one network node to cache the respective update data.

In some embodiments, and as illustrated in Fig. 9, the apparatus 900 may also comprise a Programmatic API module 911. The API may be used/accessed by the device owner in order to access some of the embodiments herein and may comprise binary components and specifications (list of devices for instance) for the upgrade.

The apparatus 900 may also comprise GUI module 912. The GUI 912 may provide the same interface as the programmatic API in GUI form for exploration and manual interaction. It may also provide status and progress in a more consumable way, as well as administrative tasks.

In some embodiments, controlling circuitry 910 may be configured to cause the API module 911 and/or GUI module 912 to provide the list of IoT devices to be updated as well as the associated firmware upgrades and update procedures.

In some embodiments wherein the list of IoT devices comprises a further list of vulnerable IoT devices, the controlling circuitry 910 may be configured to cause instructing of the at least one network node to block the vulnerable loT devices from communicating with the network until they have received required update data.

The apparatus 900 may also comprise authentication service module (CONF) 913. The authentication service may check that the device owner (and its servers) are who they claim to be (compare with step 711 of the method 700).

The apparatus 900 may also comprise Authorization service module (AUT) 916. The authorization service 916 may be configured to check that the device owner is allowed to do what it requests to do.

The apparatus 900 may also comprise Log service module (LOG) 919. The log service 919 may be configured to Gather, filter, translate, etc. the logs from the system for the device owner to get insights into how their devices are behaving.

In some embodiments the controlling circuitry 910 may be configured to cause the log service module 919 to, when it is determined that IoT devices of the list failed in updating successfully, gather information associated with the update indicative of reasons for failure of successful updating and the controlling circuitry 910 may be configured to cause informing of the loT device owner of the gathered information.

The apparatus 900 may also comprise Updating procedures module (PROC) 914. The updating procedures may be configured to implement the actual update of devices. It may hence cause blocking and un-blocking, rolling upgrades, rollbacks, making sure a certain percentage of devices are always running, etc. Hence, in some embodiments, the controlling circuitry 910 may be configured to cause the updating procedures module 914 to comprise updating procedures comprising information indicative of at least one procedure for carrying out the firmware update and at least one procedure for determining whether the firmware update is successfully performed.

The apparatus 900 may also comprise Update scheduling module (SCHED) 917. The update scheduling may be configured to decide when and how to do the updates of the devices in an additional degree of freedom for the network to optimize to reduce completion time of the upgrade.

In some embodiments, the controlling circuitry 910 may be configured to cause (e.g. by causing the update scheduling module 917) instructing of the at least one network node to instruct the loT devices to remain in an active state for a whole duration of receiving the respective update data according to the updating schedule and to return to a default sleep cycle when the firmware update is complete.

In some embodiments, the controlling circuitry may be configured to cause e.g. by causing the update scheduling module 917 and/or updating procedures module 914 to instruct the at least one network node to push the required update data to the blocked vulnerable loT devices according to the updating schedule and determine whether the vulnerable loT devices were updated successfully based on the update procedure.

In some embodiments, the controlling circuitry 910 may be configured to cause informing of an loT device owner server of any unsuccessful updates, instructing of the at least one network node to unblock the vulnerable IoT devices when it is determined that the vulnerable IoT devices are successfully updated and informing of the loT device owner of the successful update.

In some embodiments, the controlling circuitry 910 may be configured to cause, e.g. by causing the update scheduling module 917 and/or updating procedures module 914, determination, based on the update procedure, of whether IoT devices of the list were successfully updated according to the updating schedule and informing of the loT device owner of any unsuccessful or successful updates.

The apparatus 900 may also comprise Location and debug service module (DEBUG) 920. The location and debug service may be configured to assist the device owner in locating and debugging their devices.

The apparatus 900 may also comprise a Storage module (MEM) 923. The storage maybe configured to store new and older firmware versions used for upgrade and rollbacks.

The apparatus 900 may also comprise Distribution and caching module (DIST) 915. Distributing and caching may be configured to decide where to cache the firmware (what edge data centers, compute nodes, eNB:s, network nodes, gNB etc.) to keep the load on the network to a minimum.

The apparatus 900 may also comprise Lab service module (LAB) 918. The Lab service may be configured to provide the possibility for device owners to provide a limited set of devices that are in a network operator's lab setup. Possibly with extended/additional debug and log possibilities, for example, device logging or power consumption measurements.

The apparatus 900 may also comprise Network usage and stability features module (NETW) 921. The network usage and stability features may be the operator's internal service and configured to ensure that devices served by network are served without causing disturbances. It may be configured to check on data usage, how it is done and at what numbers of devices that exists in the network and where. It may further be configured to assist in deciding how to do updates, expand the loT services/network and predict future usage. The network usage and stability features may provide the operator with deeper insight as to how their network is used besides just being a bitpipe for communication between the device owner and the loT devices.

The apparatus 900 may also comprise Physical resources module (PHYS) 922. The physical resource may be configured to comprise references to all the physical resources used for the services such as eNB:s, labs, network, servers and so on.

Since all management of IoT devices should preferably be fully automated it can be done from "anywhere" and thus handed from the device owner to the network operator. The update procedure can be packaged with cloud technologies, such as virtual machines (VMs) or container or combination of these and handed to the network operator. Alternatively using standardized (or de facto standard) ways of updating the firmware and it is more of an effort for the operator to provide services for different standard ways of updating firmware.

The update service may include components from a third party for the upgrade that may be a partner for the implementation of the device. This depends on how devices are put together from different pieces. A loT device will typically consist of a processor for doing the tasks the device is designed for and a modem that is used for the communication. The upgrade of the modem component might require tools that are provided by the modem vendor that is then used by the device owner. These external components may require additional components/step in order to be updated.

Since the use cases for IoT devices and the solutions/implementations vary a lot, the upgrade services should preferably be pluggable and very flexible to provide the service to as many different device owners as possible.

As an alternative to pushing out new firmware from the network nodes there is a possibility of partly pushing (from the entity that makes the firmware) to the networks and letting the device then when it is ready pull the firmware and do an update.

In some embodiments, the apparatus 900 may be comprised in a network node. In some embodiments, the apparatus may be comprised in a network operator server. In some embodiments, a network operator server may be a network node and/or a central server.

The described embodiments herein provides several advantages. For example, the network becomes less of a black box for loT device developers/owners (using 3GPP standards), since the device manufacturer/owner can now get better understanding of the connection procedure and help in both debugging and development as well as utilizing the knowledge and infrastructure of the network (operator) instead of just knowing that a device is in the operators network somewhere and working point to point to each device.

The embodiments described herein furthermore enables increased security since the window between finding and rolling out a fix for security vulnerability/critical bug is closed or significantly decreased. Additionally, devices that is deemed an insecure version of the firmware may in many cases not be allowed to communicate and or operate.

Another advantage is potential savings in power for IoT devices since they do not communicate while waiting for update. Potential savings in power may also be obtained since the network is enabled to schedule the firmware update in time and schedule the specific traffic that constitutes the update.

Another advantage is smooth roll outs by potentially decreasing the time needed for a full rollout of new firmware since the work is distributed to the network operator that can distribute it further closer to edge/eNB:s serving the loT devices.

The success rate of updates may furthermore be increased since the network can better schedule the update during low load time, and may better ensure that connections are maintained.

The embodiments described herein allows for quicker identification and correction of problems due to more detailed logs from the network side since physical location of devices may be appended to logs when the upgrade/update fails to assist in fixing non-working devices.

Furthermore, a network operator is enabled to better plan network load since it will be in control of timing for updates. A firmware upgrade/update is typically many factors larger, and in the other direction (i.e. from network to device), compared to normal operations.

The embodiments described herein increase scalability for loT device owners without incurring cost on the device owner itself since the network infrastructure can be used for distributing the firmware instead of recurrently fetching the same firmware over and over again.

In the same manner the load of on the operator network is reduced since the firmware becomes cached closer to the devices.

The embodiments described herein may also lead to decreased risk of network disturbances due to bad firmware upgrades in IoT devices.

The described embodiments and their equivalents may be realized in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of this disclosure.

Embodiments may appear within an electronic apparatus (such as a wireless communication device) comprising circuitry/logic or performing methods according to any of the embodiments. The electronic apparatus may, for example, be a portable or handheld mobile radio communication equipment, a mobile radio terminal, a mobile telephone, a base station, a base station controller, a pager, a communicator, an electronic organizer, a smartphone, a computer, a notebook, a USB-stick, a plug-in card, an embedded drive, or a mobile gaming device.

According to some embodiments, a computer program product comprises a computer readable medium such as, for example, a diskette or a CD-ROM. The computer readable medium may have stored thereon a computer program comprising program instructions. The computer program may be loadable into a data-processing unit, which may, for example, be comprised in a mobile terminal. When loaded into the data-processing unit, the computer program may be stored in a memory associated with or integral to the data-processing unit. According to some embodiments, the computer program may, when loaded into and run by the data-processing unit, cause the data-processing unit to execute method steps according to, for example, the methods shown in any of the Figures 5-6.

Reference has been made herein to various embodiments. However, a person skilled in the art would recognize numerous variations to the described embodiments that would still fall within the scope of the claims. For example, the method embodiments described herein describes example methods through method steps being performed in a certain order. However, it is recognized that these sequences of events may take place in another order without departing from the scope of the claims. Furthermore, some method steps may be performed in parallel even though they have been described as being performed in sequence.

In the same manner, it should be noted that in the description of embodiments, the partition of functional blocks into particular units is by no means limiting. Contrarily, these partitions are merely examples. Functional blocks described herein as one unit may be split into two or more units. In the same manner, functional blocks that are described herein as being implemented as two or more units may be implemented as a single unit without departing from the scope of the claims.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely for illustrative purpose and by no means limiting. Instead, all variations that fall within the range of the claims are intended to be embraced therein.

## Claims

1. A method for managing a plurality of Internet of Things (IoT)-devices associated with a loT device owner and connected to a wireless network, the method comprising:
- receiving (510), by a network operator controller, a list of IoT devices that are scheduled for a firmware update, wherein the list is indicative of respective update data and update procedure for each loT device of the list;
- determining (520, 721), by the network operator controller, at least one network node serving a geographical area covering a respective location of each of the loT devices of the list of devices;
- the network operator controller causing caching (530, 723a, 723b) of the respective update data;
- determining (540, 741) an updating schedule indicative of when each loT device is to receive its respective update data, wherein the updating schedule is based on at least one network condition; and
- instructing (550), by the network operator controller, the at least one network node to update the loT devices with the cached respective update data according to the updating schedule and update procedure.

2. The method according to claim 1, wherein the update procedure comprises information indicative of at least one procedure for carrying out the firmware update and at least one procedure for determining whether the firmware update is successfully performed.

3. The method according to any of the previous claims, further comprising
- instructing the at least one network node to instruct the loT devices to remain in an active state for a whole duration of receiving the respective update data according to the updating schedule and to return to a default sleep cycle when the firmware update is complete.

4. The method according to any of the previous claims 1-3, wherein the list of IoT devices comprises a further list of vulnerable loT devices, and wherein the method further comprises
- instructing (541, 722) the at least one network node to block the vulnerable loT devices from communicating with the network until they have received required update data.

5. The method according to claim 4, further comprising
- instructing (601, 742) the at least one network node to push the required update data to the blocked vulnerable loT devices according to the updating schedule and determine (602) whether the vulnerable loT devices were updated successfully based on the update procedure;
- informing (605, 744) an loT device owner server of any unsuccessful updates;
- instructing (603, 743) the at least one network node to unblock the vulnerable loT devices when it is determined that the vulnerable loT devices are successfully updated; and
- informing (604, 744) the loT device owner server of the successful update.

6. The method according to any of the previous claims 1-5, wherein causing caching (530, 723a, 723b) of the respective update data comprises caching the respective update data at a central network server and/or instructing the at least one network node to cache the respective update data.

7. A computer program product comprising a non-transitory computer readable medium (800), wherein the non-transitory computer readable medium (800) has stored there on a computer program comprising program instructions, wherein the computer program is configured to be loadable into a data-processing unit (810), comprising a processor (830) and a memory (820) associated with or integral to the data-processing unit, wherein when loaded into the data processing unit (810), the computer program is configured to be stored in the memory (820), wherein the computer program when loaded into and run by the processor (830) is configured to cause execution of the method steps according to any of the claims 1-6.

8. An apparatus (900) of a network operator controller for managing a plurality of Internet of Things (IoT)-devices associated with a loT device owner and connected to a wireless network, the apparatus comprising controlling circuitry (910) configured to cause
- reception of a list of IoT devices that are scheduled for a firmware update, wherein the list is indicative of respective update data and update procedure for each IoT device of the list;
- determination of at least one network node serving a geographical area covering a respective location of each of the loT devices of the list of devices;
- caching of the respective update data;
- determination of an updating schedule indicative of when each loT device is to receive its respective update data, wherein the updating schedule is based on at least one network condition; and
- for each loT device scheduled for the update, instructing of the at least one network node to update the loT device with the cached respective update data according to the updating schedule and update procedure.

9. The apparatus according to claim 8, wherein the update procedure comprises information indicative of at least one procedure for carrying out the firmware update and at least one procedure for determining whether the firmware update is successfully performed.

10. The apparatus according to any of the previous claims 8-9, wherein the controlling circuitry (910) is further configured to cause
- instructing of the at least one network node to instruct the loT devices to remain in an active state for a whole duration of receiving the respective update data according to the updating schedule and to return to a default sleep cycle when the firmware update is complete.

11. The apparatus according to any of the claims 8-10, wherein the list of IoT devices comprises a further list of vulnerable loT devices, and wherein the controlling circuitry is configured to cause
- instructing of the at least one network node to block the vulnerable loT devices from communicating with the network until they have received required update data.

12. The apparatus according to claim 11, wherein the controlling circuitry (910) is configured to cause:
- instructing of the at least one network node to push the required update data to the blocked vulnerable loT devices according to the updating schedule and determine whether the vulnerable loT devices were updated successfully based on the update procedure;
- informing of an loT device owner server of any unsuccessful updates;
- instructing of the at least one network node to unblock the vulnerable loT devices when it is determined that the vulnerable loT devices are successfully updated; and
- informing of the loT device owner server of the successful update.

13. The apparatus according to any of the previous claims 8-12, wherein the controlling circuitry is configured to cause caching of the respective update data at a central network server and/or causing instructing of the at least one network node to cache the respective update data.

14. The apparatus according to any of the previous claims 8-13, wherein the controlling circuitry (910) is configured to cause:
- determination, based on the update procedure, of whether IoT devices of the list were successfully updated according to the updating schedule; and
- informing of the loT device owner of any unsuccessful or successful updates.

15. The apparatus according to claim 14, wherein, when it is determined that IoT devices of the list failed in updating successfully, the controlling circuitry is further configured to cause
- gathering of information associated with the update indicative of reasons for failure of successful updating; and
- informing of the loT device owner of the gathered information.

## Patentansprüche

1. Verfahren zur Verwaltung einer Mehrzahl von Internet-der-Dinge-(IoT-)Geräten, die mit einem IoT-Geräteeigentümer assoziiert und mit einem drahtlosen Netzwerk verbunden ist, wobei das Verfahren umfasst:
- Empfangen (510) einer Liste von IoT-Geräten, die für eine Firmware-Aktualisierung geplant sind, durch eine Netzwerbetreibersteuerung, wobei die Liste jeweilige Aktualisierungsdaten und eine Aktualisierungsprozedur für jedes IoT-Gerät der Liste anzeigt;
- Bestimmen (520, 721) mindestens eines Netzwerkknotens, der ein geografisches Gebiet versorgt, das einen jeweiligen Standort jedes der IoT-Geräte der Liste von Geräten abdeckt, durch die Netzwerbetreibersteuerung;
- wobei die Netzwerkbetreibersteuerung ein Zwischenspeichern (530, 723a, 723b) der jeweiligen Aktualisierungsdaten bewirkt;
- Bestimmen (540, 741) eines Aktualisierungsplans, der anzeigt, wann jedes IoT-Gerät seine jeweiligen Aktualisierungsdaten empfangen soll, wobei der Aktualisierungsplan auf mindestens einer Netzwerkbedingung basiert; und
- Anweisen (550) des mindestens einen Netzwerkknotens durch die Netzwerkbetreibersteuerung zum Aktualisieren der IoT-Geräte mit den jeweiligen zwischengespeicherten Aktualisierungsdaten gemäß dem Aktualisierungsplan und der Aktualisierungsprozedur.

2. Verfahren nach Anspruch 1, wobei die Aktualisierungsprozedur Informationen umfasst, die mindestens eine Prozedur zum Durchführen der Firmware-Aktualisierung und mindestens eine Prozedur zum Bestimmen anzeigen, ob die Firmware-Aktualisierung erfolgreich durchgeführt wird.

3. Verfahren nach einem der vorhergehenden Ansprüche, ferner umfassend:
- Anweisen des mindestens einen Netzwerkknotens zum Anweisen der IoT-Geräte, für eine gesamte Dauer des Empfangens der jeweiligen Aktualisierungsdaten gemäß dem Aktualisierungsplan in einem aktiven Zustand zu bleiben und bei Abschluss der Firmware-Aktualisierung in einen vorgegebenen Schlafzyklus zurückzukehren.

4. Verfahren nach einem der vorhergehenden Ansprüche 1 bis 3, wobei die Liste von IoT-Geräten eine weitere Liste von gefährdeten IoT-Geräten umfasst, und wobei das Verfahren ferner umfasst:
- Anweisen (541, 722) des mindestens einen Netzwerkknotens zum Sperren der gefährdeten IoT-Geräte, damit sie mit dem Netzwerk nicht kommunizieren, bis sie die erforderlichen Aktualisierungsdaten empfangen haben.

5. Verfahren nach Anspruch 4, ferner umfassend:
- Anweisen (601, 742) des mindestens einen Netzwerkknotens zum Pushen der erforderlichen Aktualisierungsdaten zu den gesperrten gefährdeten IoT-Geräten gemäß dem Aktualisierungsplan und Bestimmen (602), ob die gefährdeten IoT-Geräte erfolgreich aktualisiert wurden, basierend auf der Aktualisierungsprozedur;
- Informieren (605, 744) eines IoT-Geräteeigentümerservers über jede erfolglose Aktualisierung;
- Anweisen (603, 743) des mindestens einen Netzwerkknotens zum Entsperren der gefährdeten IoT-Geräte, wenn bestimmt wird, dass die gefährdeten IoT-Geräte erfolgreich aktualisiert werden; und
- Informieren (604, 744) des IoT-Geräteeigentümerservers über die erfolgreiche Aktualisierung.

6. Verfahren nach einem der vorhergehenden Ansprüche 1 bis 5, wobei das Bewirken von Zwischenspeichern (530, 723a, 723b) der jeweiligen Aktualisierungsdaten ein Zwischenspeichern der jeweiligen Aktualisierungsdaten an einem zentralen Netzwerkserver und/oder Anweisen des mindestens einen Netzwerkknotens zum Zwischenspeichern der jeweiligen Aktualisierungsdaten umfasst.

7. Computerprogrammprodukt, umfassend ein nichttransitorisches computerlesbares Medium (800), wobei das nicht-transitorische computerlesbare Medium (800) ein darauf gespeichertes Computerprogramm mit Programmanweisungen aufweist, wobei das Computerprogramm so konfiguriert ist, dass es in eine Datenverarbeitungseinheit (810) geladen werden kann, die einen Prozessor (830) und einen Speicher (820) umfasst, die mit der Datenverarbeitungseinheit verbunden oder darin integriert sind, wobei das Computerprogramm so konfiguriert ist, dass, wenn in die Datenverarbeitungseinheit (810) geladen, es im Speicher (820) gespeichert wird, wobei das Computerprogramm so konfiguriert ist, dass, wenn in den Prozessor (830) geladen und von diesem ausgeführt, es die Ausführung der Verfahrensschritte nach einem der Ansprüche 1 bis 6 bewirkt.

8. Vorrichtung (900) einer Netzwerkbetreibersteuerung zum Verwalten einer Mehrzahl von Internet-der-Dinge-(IoT-)Geräten, die mit einem IoT-Geräteeigentümer assoziiert und mit einem drahtlosen Netzwerk verbunden ist, wobei die Vorrichtung eine Steuerschaltungsanordnung (910) umfasst, die so konfiguriert ist, dass sie Folgendes bewirkt:
- Empfangen einer Liste von IoT-Geräten, die für eine Firmware-Aktualisierung geplant sind, wobei die Liste jeweilige Aktualisierungsdaten und eine Aktualisierungsprozedur für jedes IoT-Gerät der Liste anzeigt;
- Bestimmen mindestens eines Netzwerkknotens, der ein geografisches Gebiet versorgt, das einen jeweiligen Standort jedes der IoT-Geräte der Liste von Geräten abdeckt;
- Zwischenspeichern der jeweiligen Aktualisierungsdaten;
- Bestimmen eines Aktualisierungsplans, der anzeigt, wann jedes IoT-Gerät seine jeweiligen Aktualisierungsdaten empfangen soll, wobei der Aktualisierungsplan auf mindestens einer Netzwerkbedingung basiert; und
- Anweisen des mindestens einen Netzwerkknotens zum Aktualisieren der IoT-Geräte mit den jeweiligen zwischengespeicherten Aktualisierungsdaten gemäß dem Aktualisierungsplan und der Aktualisierungsprozedur für jedes der für die Aktualisierung geplanten IoT-Geräte.

9. Vorrichtung nach Anspruch 8, wobei die Aktualisierungsprozedur Informationen umfasst, die mindestens eine Prozedur zum Durchführen der Firmware-Aktualisierung und mindestens eine Prozedur zum Bestimmen anzeigen, ob die Firmware-Aktualisierung erfolgreich durchgeführt wird.

10. Vorrichtung nach einem der Ansprüche 8 bis 9, wobei die Steuerschaltungsanordnung (910) ferner so konfiguriert ist, dass sie Folgendes bewirkt:
- Anweisen des mindestens einen Netzwerkknotens zum Anweisen der IoT-Vorrichtung, für eine gesamte Dauer des Empfangens der jeweiligen Aktualisierungsdaten gemäß dem Aktualisierungsplan in einem aktiven Zustand zu bleiben und bei Abschluss der Firmware-Aktualisierung in einen vorgegebenen Schlafzyklus zurückzukehren.

11. Vorrichtung nach einem der vorhergehenden Ansprüche 8 bis 10, wobei die Liste von IoT-Geräten eine weitere Liste von gefährdeten IoT-Geräten umfasst, und wobei die Steuerschaltungsanordnung so konfiguriert ist, dass sie Folgendes bewirkt:
- Anweisen des mindestens einen Netzwerkknotens zum Sperren der gefährdeten IoT-Geräte, damit sie mit dem Netzwerk nicht kommunizieren, bis sie die erforderlichen Aktualisierungsdaten empfangen haben.

12. Vorrichtung nach Anspruch 11, wobei die Steuerschaltungsanordnung (910) ferner so konfiguriert ist, dass sie Folgendes bewirkt:
- Anweisen des mindestens einen Netzwerkknotens zum Pushen der erforderlichen Aktualisierungsdaten zu den gesperrten gefährdeten IoT-Geräten gemäß dem Aktualisierungsplan und Bestimmen, ob die gefährdeten IoT-Geräte erfolgreich aktualisiert wurden, basierend auf der Aktualisierungsprozedur;
- Informieren eines IoT-Geräteeigentümerservers über jede erfolglose Aktualisierung;
- Anweisen des mindestens einen Netzwerkknotens zum Entsperren der gefährdeten IoT-Geräte, wenn bestimmt wird, dass die gefährdeten IoT-Geräte erfolgreich aktualisiert werden; und
- Informieren des IoT-Geräteeigentümerservers über die erfolgreiche Aktualisierung.

13. Vorrichtung nach einem der vorhergehenden Ansprüche 8 bis 12, wobei die Steuerschaltungsanordnung zum Bewirken von Zwischenspeichern der jeweiligen Aktualisierungsdaten an einem zentralen Netzwerkserver und/oder Bewirken von Anweisen des mindestens einen Netzwerkknotens zum Zwischenspeichern der jeweiligen Aktualisierungsdaten konfiguriert ist.

14. Vorrichtung nach einem der vorhergehenden Ansprüche 8 bis 13, wobei die Steuerschaltungsanordnung (910) ferner so konfiguriert ist, dass sie Folgendes bewirkt:
- Bestimmen dessen, ob IoT-Geräte der Liste erfolgreich gemäß dem Aktualisierungsplan aktualisiert wurden, basierend auf der Aktualisierungsprozedur; und
- Informieren des IoT-Geräteeigentümers über jede erfolglose oder erfolgreiche Aktualisierung.

15. Vorrichtung nach Anspruch 14, wobei die Steuerschaltungsanordnung so konfiguriert ist, dass sie, wenn bestimmt wird, dass IoT-Geräte der Liste nicht erfolgreich aktualisiert wurden, Folgendes bewirkt:
- Erfassen von Informationen, die mit der Aktualisierung assoziiert sind und die Gründe für das Scheitern einer erfolgreichen Aktualisierung anzeigen; und
- Informieren des IoT-Geräteeigentümers über die erfassten Informationen.

## Revendications

1. Procédé de gestion d'une pluralité de dispositifs de l'Internet des objets (IoT) associés à un propriétaire de dispositifs IoT et reliés à un réseau sans fil, le procédé comprenant :
- la réception (510), par un dispositif de commande d'opérateur de réseau, d'une liste de dispositifs IoT qui sont ordonnancés pour une mise à jour de micrologiciel, dans lequel la liste est indicative de données de mise à jour respectives et d'une procédure de mise à jour pour chaque dispositif IoT dans la liste ;
- la détermination (520, 721), par le dispositif de commande d'opérateur de réseau, d'au moins un noeud de réseau desservant une zone géographique couvrant un emplacement respectif de chacun des dispositifs IoT de la liste de dispositifs ;
- le dispositif de commande d'opérateur de réseau provoquant la mise en mémoire cache (530, 723a, 723b) des données de mise à jour respectives ;
- la détermination (540, 741) d'un ordonnancement de mise à jour indiquant quand chaque dispositif IoT doit recevoir ses données de mise à jour respectives, dans lequel l'ordonnancement de mise à jour est basé sur au moins une condition de réseau ; et
- l'instruction (550), par le dispositif de commande d'opérateur de réseau, à l'au moins un noeud de réseau de mettre à jour les dispositifs IoT avec les données de mise à jour respectives mises en mémoire cache en fonction de l'ordonnancement de mise à jour et de la procédure de mise à jour.

2. Procédé selon la revendication 1, dans lequel la procédure de mise à jour comprend des informations indicatives d'au moins une procédure pour réaliser la mise à jour de micrologiciel et d'au moins une procédure pour déterminer si la mise à jour de micrologiciel est réalisée avec succès.

3. Procédé selon l'une quelconque des revendications précédentes, comprenant en outre
- l'instruction à l'au moins un noeud de réseau d'instruire aux dispositifs IoT de rester dans un état actif pendant une durée complète de réception des données de mise à jour respectives en fonction de l'ordonnancement de mise à jour et de retourner à un cycle de sommeil par défaut lorsque la mise à jour de micrologiciel est terminée.

4. Procédé selon l'une quelconque des revendications 1 à 3, dans lequel la liste de dispositifs IoT comprend une autre liste de dispositifs IoT vulnérables, et dans lequel le procédé comprend en outre
- l'instruction (541, 722) à l'au moins un noeud de réseau de bloquer les dispositifs IoT vulnérables pour qu'ils ne communiquent pas avec le réseau avant d'avoir reçu des données de mise à jour requises.

5. Procédé selon la revendication 4, comprenant en outre
- l'instruction (601, 742) à l'au moins un noeud de réseau de pousser les données de mise à jour requises vers les dispositifs IoT vulnérables bloqués en fonction de l'ordonnancement de mise à jour et de déterminer (602) si les dispositifs IoT vulnérables ont ou non été mis à jour avec succès sur la base de la procédure de mise à jour ;
- l'information (605, 744) d'un serveur de propriétaire de dispositifs IoT au sujet des mises à jour ayant échoué ;
- l'instruction (603, 743) à l'au moins un noeud de réseau de débloquer les dispositifs IoT vulnérables lorsqu'il est déterminé que les dispositifs IoT vulnérables ont été mis à jour avec succès ; et
- l'information (604, 744) du serveur de propriétaire de dispositifs IoT au sujet de la mise à jour réussie.

6. Procédé selon l'une quelconque des revendications 1 à 5, dans lequel la provocation de la mise en mémoire cache (530, 723a, 723b) des données de mise à jour respectives comprend la mise en mémoire cache des données de mise à jour respectives au niveau d'un serveur de réseau central et/ou l'instruction à l'au moins un noeud de réseau de mettre les données de mise à jour respectives en mémoire cache.

7. Produit de programme informatique comprenant un support non transitoire lisible par ordinateur (800), dans lequel il est stocké, sur le support non transitoire lisible par ordinateur (800), un programme informatique comprenant des instructions de programme, dans lequel le programme informatique est configuré pour pouvoir être chargé dans une unité de traitement de données (810), comprenant un processeur (830) et une mémoire (820) associés ou intégraux à l'unité de traitement de données, dans lequel, lorsqu'il est chargé dans l'unité de traitement de données (810), le programme informatique est configuré pour être stocké dans la mémoire (820), dans lequel le programme informatique, lorsqu'il est chargé dans et exécuté par le processeur (830), est configuré pour provoquer une exécution des étapes de procédé selon l'une quelconque des revendications 1 à 6.

8. Appareil (900) d'un dispositif de commande d'opérateur de réseau pour gérer une pluralité de dispositifs de l'Internet des objets (IoT) associés à un propriétaire de dispositifs IoT et reliés à un réseau sans fil, l'appareil comprenant une circuiterie de commande (910) configurée pour provoquer
- la réception d'une liste de dispositifs IoT qui sont ordonnancés pour une mise à jour de micrologiciel, dans lequel la liste est indicative de données de mise à jour respectives et d'une procédure de mise à jour pour chaque dispositif IoT dans la liste ;
- la détermination d'au moins un noeud de réseau desservant une zone géographique couvrant un emplacement respectif de chacun des dispositifs IoT de la liste de dispositifs ;
- la mise en mémoire cache des données de mise à jour respectives ;
- la détermination d'un ordonnancement de mise à jour indiquant quand chaque dispositif IoT doit recevoir ses données de mise à jour respectives, dans lequel l'ordonnancement de mise à jour est basé sur au moins une condition de réseau ; et
- pour chaque dispositif IoT ordonnancé pour la mise à jour, l'instruction à l'au moins un noeud de réseau de mettre à jour les dispositifs IoT avec les données de mise à jour respectives mises en mémoire cache en fonction de l'ordonnancement de mise à jour et de la procédure de mise à jour.

9. Appareil selon la revendication 8, dans lequel la procédure de mise à jour comprend des informations indicatives d'au moins une procédure pour réaliser la mise à jour de micrologiciel et d'au moins une procédure pour déterminer si la mise à jour de micrologiciel est réalisée avec succès.

10. Appareil selon la revendication 8 ou 9, dans lequel la circuiterie de commande (910) est en outre configurée pour provoquer
- l'instruction à l'au moins un noeud de réseau d'instruire aux dispositifs IoT de rester dans un état actif pendant une durée complète de réception des données de mise à jour respectives en fonction de l'ordonnancement de mise à jour et de retourner à un cycle de sommeil par défaut lorsque la mise à jour de micrologiciel est terminée.

11. Appareil selon l'une quelconque des revendications 8 à 10, dans lequel la liste de dispositifs IoT comprend une autre liste de dispositifs IoT vulnérables, et dans lequel la circuiterie de commande est configurée pour provoquer
- l'instruction à l'au moins un noeud de réseau de bloquer les dispositifs IoT vulnérables pour qu'ils ne communiquent pas avec le réseau avant d'avoir reçu des données de mise à jour requises.

12. Appareil selon la revendication 11, dans lequel la circuiterie de commande (910) est configurée pour provoquer :
- l'instruction à l'au moins un noeud de réseau de pousser les données de mise à jour requises vers les dispositifs IoT vulnérables bloqués en fonction de l'ordonnancement de mise à jour et de déterminer si les dispositifs IoT vulnérables ont ou non été mis à jour avec succès sur la base de la procédure de mise à jour ;
- l'information d'un serveur de propriétaire de dispositifs IoT au sujet des mises à jour ayant échoué ;
- l'instruction à l'au moins un noeud de réseau de débloquer les dispositifs IoT vulnérables lorsqu'il est déterminé que les dispositifs IoT vulnérables ont été mis à jour avec succès ; et
- l'information du serveur de propriétaire de dispositifs IoT au sujet de la mise à jour réussie.

13. Appareil selon l'une quelconque des revendications 8 à 12, dans lequel la circuiterie de commande est configurée pour provoquer la mise en mémoire cache des données de mise à jour respectives au niveau d'un serveur de réseau central et/ou l'instruction à l'au moins un noeud de réseau de mettre les données de mise à jour respectives en mémoire cache.

14. Appareil selon l'une quelconque des revendications 8 à 13, dans lequel la circuiterie de commande (910) est configurée pour provoquer :
- la détermination, sur la base de la procédure de mise à jour, si des dispositifs IoT de la liste ont ou non été mis à jour avec succès selon l'ordonnancement de mise à jour ; et
- l'information du propriétaire de dispositifs IoT au sujet de mises à jour ayant échoué ou réussies.

15. Appareil selon la revendication 14, dans lequel, lorsqu'il est déterminé que les dispositifs IoT de la liste ne sont pas parvenus à être mis à jour avec succès, la circuiterie de commande est en outre configurée pour provoquer
- le recueil d'informations associées à la mise à jour indiquant des raisons de l'échec de la mise à jour ; et
- l'information du propriétaire de dispositifs IoT au sujet des informations recueillies.
